# EUROPEAN PATENT APPLICATION

(11) **EP 1 353 141 A2**
(43) Date of publication of application: **15.10.2003**
(21) Application number: 03380052.5
(22) Date of filing: 07.03.2003
(51) Int. Cl.: G01B 11/02

(54) **Laser system for measuring pieces for a machine tool**

(30) Priority: 11.03.2002 ES 200200565
(71) Applicant: Danobat, S. Coop., 20870 Elgoibar (Guipuzkoa) (ES)
(72) Inventor: Zamorano Roldan, Jose Manuel, 20870 Elgoibar (Gipuzkoa) (ES)

(57) **Abstract**

"Laser system for measuring pieces for a machine tool, particularly for measuring revolution pieces (7) with transversal grooves (8), the system comprising a numeric control (4), a computer (3), a data acquisition card (2), a laser measuring apparatus (1) oriented to the axis of piece (7) perpendicularly to said axis, means for displacing the laser measuring apparatus (1) on a shaft (6) parallel to the axis of the piece (7), and an encoder (5) on said shaft (6), wherein the data acquisition card (2) records a signal (9) of the laser measuring apparatus (1) and a signal (10) of the encoder (5), and the computer (3) detects the transversal grooves (8) by reading the signal (9), obtains the axial positions corresponding to said transversal grooves (8) by reading signal (10), and sends said axial positions to the numeric control (4)."

## Description

### TECHNICAL FIELD

The present invention relates to systems for the measurement of pieces in machine tools.

### BACKGROUND OF THE INVENTION

Systems for the measurement of pieces in machine tools using mechanical feelers are known. In these systems, the numeric control determines the dimensions of the piece to be machined by means of the signal it receives from the mechanical feeler. Said mechanical feeler makes contact with the surface of the piece to be machined and sends the numeric control the value of the distance between the point of contact and a given reference point.

### DESCRIPTION OF THE INVENTION

A first aspect of the invention refers to a laser system for measuring pieces for a machine tool, particularly for measuring revolution pieces with transversal grooves. Said system comprises a numeric control, a computer, a data acquisition card, a laser measuring apparatus oriented to the axis of the piece perpendicularly to said axis, means for displacing the laser measuring apparatus on a shaft parallel to the axis of the piece, and an encoder placed on the shaft on which the laser measuring apparatus is displaced.

The data acquisition card registers the signals from the laser measuring apparatus and the encoder during the displacement of said laser measuring apparatus. The computer then detects the transversal grooves by reading the signal from the laser measuring apparatus registered on the data acquisition card, obtains the axial positions corresponding to said transversal grooves by reading the signal from the encoder registered on the data acquisition card, and sends said axial positions to the numeric control.

A second aspect of the invention refers to a method for the positioning of the transversal grooves of a piece to be machined based on a signal from a laser measuring apparatus which has moved on a shaft parallel to the axis of the piece and on a signal from an encoder placed on said shaft, said signals being registered on a data acquisition card. Said method includes the steps of reading the signal from the laser measuring apparatus and detecting the transversal grooves, identifying the transitions of said signal, determining the pulses of the signal from the encoder corresponding to said transitions, so obtaining the positions of said transversal grooves, and transmitting said positions to a numeric control.

A third aspect of the invention refers to a computer program which runs in a computer linked to a machine tool numeric control, and which implements the method described above.

The measurement and positioning system of the invention makes it possible to reduce the time for the positioning of the transversal grooves. On the other hand, with said system, transversal grooves in which it is not possible to introduce mechanical feelers can be positioned.

### DESCRIPTION OF THE DRAWINGS

FIG. 1 is a diagram of an embodiment of the system of the invention.
FIG. 2 shows an example of the main signals used in the invention.
FIG. 3 shows the various forms a transversal groove may have in a piece to be machined.

### DETAILED DISCLOSURE OF THE INVENTION

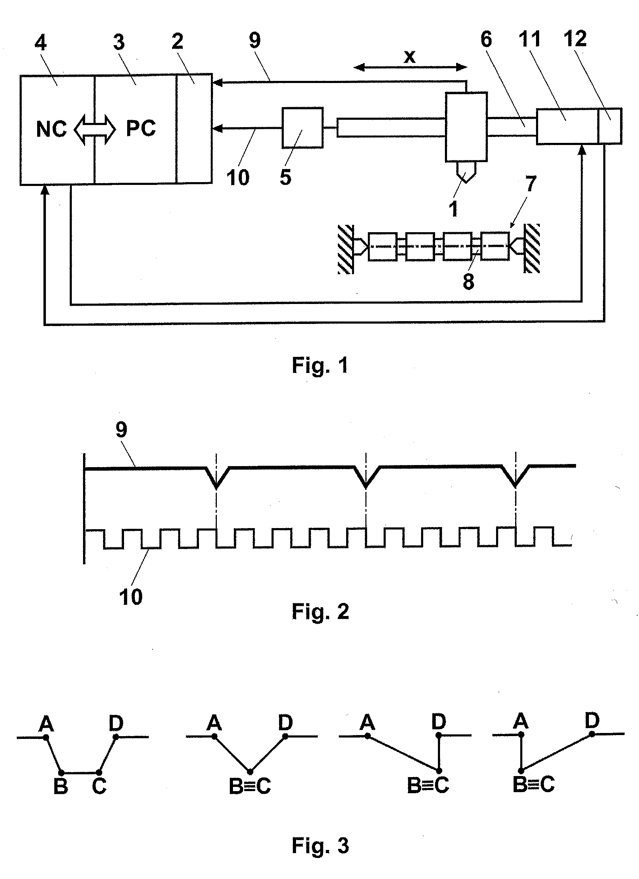

The laser system of the invention is used particularly for detecting the transversal grooves 8 of revolution pieces 7 as shown in figure 1, so that the various areas to be machined on piece 7, i.e. the areas separated by transversal grooves 8, are determined. The system comprises a numeric control 4, a computer 3 and a data acquisition card 2. It also comprises a laser measuring apparatus 1 oriented to the axis of piece 7 perpendicularly to said axis, means for displacing the laser measuring apparatus 1 on a shaft 6 parallel to the axis of the piece 7, and an encoder 5 on said shaft 6.

The data acquisition card 2 registers the signals 9 and 10 of the laser measuring apparatus 1 and the encoder 5 respectively, while said laser measuring apparatus 1 is displaced on shaft 6. Signal 9 of the laser measuring apparatus 1 is representative of the distance between the laser of the laser measuring apparatus 1 and piece 7.

The computer 3 detects the transversal grooves 8 by reading the signal 9 from the laser measuring apparatus 1 registered on the data acquisition card 2, obtains the axial positions corresponding to said transversal grooves 8 by reading the signal 10 from the encoder 5 registered on the data acquisition card 2, and sends said axial positions to the numeric control 4.

The shaft 6 is displaced by means of a motor 11 governed by the numeric control 4, and said numeric control 4 knows the position of the laser measuring apparatus 1 at all times through an encoder 12 linked to said motor 11.

The measurement of the position of shaft 6 with the encoder 5 starts from a reference point lined up with one reference impulse per turn of said encoder 5, that is with an impulse of the signal whose period is one impulse per turn (the signal named I0). The signal 10 is registered on the data acquisition card 2, on the basis of that reference point.

The invention includes a method for positioning transversal grooves 8 of a piece 7 to be machined, on the basis of a signal 9 from a laser measuring apparatus 1 which has displaced on a shaft 6 parallel to the axis of the piece 7 and from a signal 10 of an encoder 5 placed on said shaft 6, said signals 9 and 10 being registered on a data acquisition card 2. Said method comprises the steps of reading the signal 9 and detecting the transversal grooves 8, identifying the transitions of said signal 9, determining the pulses of signal 10 corresponding to those transitions, so obtaining the positions of said transversal grooves 8, and transmitting said positions to a numeric control 4.

The invention includes a computer program run in a computer 3 connected with a numeric control 4 of a machine tool, implementing the method described above.

Figure 2 shows the signal 9 of the laser measuring apparatus 1 and the signal 10 of the encoder 5. By means of the value of the signal 10 from the encoder 5 at the points of the signal 9 where a transversal groove 8 is detected, the computer 3 determines the positions of the various transversal grooves 8. With reference to figure 3, in determining said positions, the system can be configured in such a manner as to detect either the limit point of each groove with the area of its left (point A), the point most to the left of the bottom of each groove (point B), the point most to the right of the bottom of each groove (point C), or the limit of each groove with the area of its right (point D). Depending on the type of groove, points B and C may be the same.

## Claims

1. Laser system for measuring pieces for a machine tool, particularly for measuring revolution pieces (7) with transversal grooves (8), the system comprising a numeric control (4), a computer (3) and a data acquisition card (2), **characterised in that** it comprises a laser measuring apparatus (1) oriented to the axis of piece (7) perpendicularly to said axis, means for displacing the laser measuring apparatus (1) on a shaft (6) parallel to the axis of the piece (7), and an encoder (5) on said shaft (6), wherein the data acquisition card (2) registers a signal (9) of the laser measuring apparatus (1) and a signal (10) of the encoder (5) during the displacement of said laser measuring apparatus (1) on the shaft (6), and the computer (3) detects the transversal grooves (8) by reading the signal (9) of the laser measuring apparatus (1) registered on the data acquisition card (2), it obtains the axial positions corresponding to said transversal grooves (8) by reading the signal (10) from the encoder (5) registered on the data acquisition card (2), and it sends said axial positions to the numeric control (4).

2. Laser system for measuring pieces for a machine tool according to claim 1, **characterised in that** the measurement of the position of the shaft (6) with the encoder (5) is based on a reference point which is lined up with one reference impulse per turn of said encoder (5), the signal (10) being registered on the data acquisition card (2) on the basis of that reference point.

3. Method for detecting the transversal grooves (8) of a piece (7) to be machined, based on a signal (9) from a laser measuring apparatus (1) which has displaced on a shaft (6) parallel to the axis of the piece (7) and on a signal (10) from an encoder (5) placed on said shaft (6), said signals (9,10) being registered on a data acquisition card (2), **characterised in that** it comprises the steps of reading the signal (9) and detecting the transversal grooves (8), identifying the transitions of said signal (9), determining the pulses of the signal (10) corresponding to said transitions, so obtaining the positions of said transversal grooves (8), and transmitting said positions to a numeric control (4).

4. Computer program run in a computer (3) linked to a numeric control (4) of a machine tool, **characterised in that** it implements the method in claim 3.
